# EUROPÄISCHE PATENTSCHRIFT

(11) **EP 0 937 617 B1**
(45) Veröffentlichungstag und Bekanntmachung des Hinweises auf die Patenterteilung: **12.07.2006**
(21) Anmeldenummer: 98118807.1
(22) Anmeldetag: 05.10.1998
(51) Int. Cl.: B60T 8/88, B60T 13/66, G05B 9/02, B60T 13/74, B60T 7/04

(54) **Verfahren und Vorrichtung zur Steuerung einer Bremsanlage**
Method and device for controlling of a brake system
Procédé et dispositif pour contrôler un système de freinage

(30) Priorität: 21.02.1998 DE 19807366
(43) Veröffentlichungstag der Anmeldung: 25.08.1999
(73) Patentinhaber: ROBERT BOSCH GMBH, 70442 Stuttgart (DE)
(72) Erfinder: Schmidt, Guenther, 97941 Tauberbischofsheim (DE); Binder, Juergen, 70599 Stuttgart (DE); Winner, Hermann, 76229 Karlsruhe (DE); Gottwick, Ulrich, 70192 Stuttgart (DE)

(56) Entgegenhaltungen:
- EP-A- 0 157 309
- EP-A- 0 357 922
- WO-A-95/04674
- DE-A- 3 418 042
- DE-A- 3 630 342
- PATENT ABSTRACTS OF JAPAN vol. 017, no. 012 (M-1351), 11. Januar 1993 (1993-01-11) & JP 04 243655 A (TOYOTA MOTOR CORP), 31. August 1992 (1992-08-31)
- JONNER W-D ET AL: "ELECTROHYDRAULIC BRAKE SYSTEM - THE FIRS APPROACH TO BRAKE-BY-WIRE TECHNOLOGY" CURRENT AND FUTURE DEVELOPMENTS IN ABS/TCS AND BRAKE TECHNOLOGY, XX, XX, 1. Februar 1996 (1996-02-01), Seiten 105-112, XP000199045

## Beschreibung

### Stand der Technik

Die Erfindung betrifft ein Verfahren und eine Vorrichtung zur Steuerung einer Bremsanlage gemäß den Oberbegriffen der unabhängigen patentansprüche 1 und 14.

Ein derartiges Verfahren bzw. eine derartige Vorrichtung ist beispielsweise aus dem SAE-Paper 960991 bekannt. Dort wird eine elektrohydraulische Bremsanlage beschrieben, bei welcher aus der Bremspedalbetätigung durch den Fahrer ein Bremswunsch des Fahrers abgeleitet wird. Dieser Bremswunsch wird gegebenenfalls unter Berücksichtigung von weiteren Betriebsgrößen in Sollbremsdrücke für die einzelnen Radbremsen umgerechnet. Die Sollbremsdrücke werden für jedes Rad durch Druckregelkreise auf der Basis des vorgegebenen Solldrucks sowie des im Bereich der Radbremse gemessenen Istbremsdrucks eingeregelt. Da der Bremsdruck in den Radbremsen bei einer derartigen elektrohydraulischen Bremsanlage abhängig vom Fahrerbremswunsch auf elektrischem Wege über Ventilanordnungen eingestellt und moduliert wird, ist zum Sicherstellen der Betriebssicherheit der Bremsanlage eine Überwachung der korrekten Funktionsweise der Druckmodulation bzw. geeignete Maßnahmen im Fehlerfall notwendig.

Aus der Schrift EP 0 386 953 A1 ist ein elektronisches Bremssystem zur Vermeidung einer ungleichmäßigen Bremskraftverteilung unter Störungsbedingungen, die Bremsverlust oder übermäßiges Bremsen an einem Rad verursachen könnte. Dazu weist die Anlage ein Verbindungsrohr auf, das eine Fluidverbindung zwischen den Drucksteuerelementen der zugehörigen Bremskreise herstellt, die den beiden Rädems an entgegengesetzten Enden einer Achse zugeordnet sind. Im Falle einer Störung wird in Abhängigkeit der Störungsbedingung über das Verbindungsrohr durch Drucksteuerelemente eine Wirkung von einem gestörten zu einem richtig arbeitenden Kanal erzeugt, die darauf gerichtet ist, das Druckungleichgewicht zwischen dem gestörten und dem richtig arbeitenden Kanal zu verringern.

Es ist Aufgabe der Erfindung, Maßnahmen anzugeben, mit deren Hilfe die Einregelung des Bremsdrucks in den Radbremsen sicher überwacht werden kann bzw. die einen Notbremsbetrieb im Fehlerfall sicherstellen.

Dies wird durch die kennzeichnenden Merkmale der unabhängigen Patentansprüche 1 und 14 erreicht.

### Vorteile der Erfindung

Es wird eine zuverlässige Überwachung der die Druckregelung an den einzelnen Radbremsen durchführenden Komponenten bereitgestellt. Besonders vorteilhaft ist, daß verschiedene Fehlerbilder unterschieden werden können, so daß im Fehlerfall je nach aufgetretenem Fehlerbild der jeweils geeignete Notbremsbetrieb eingeleitet wird. Durch diese Maßnahmen wird die Betriebssicherheit und Verfügbarkeit der Bremsanlage erheblich verbessert.

Besonders vorteilhaft ist, daß nicht bei jedem auftretenden Fehler die elektrische Bremsensteuerung abgeschaltet werden muß, sondern daß je nach Fehlerzustand lediglich Teilabschaltungen des elektrischen Systems stattfinden.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Dabei zeigt Figur 1 ein bevorzugtes Ausführungsbeispiel einer elektrohydraulischen Bremsanlage, während in Figur 2 die die elekttrohydraulische Bremsanlage steuernde Steuereinheit dargestellt ist. In den Figuren 3 und 4 sind Flußdiagramme dargestellt, die eine bevorzugte Realisierung der Überwachung der Druckmodulation bzw. die Auswahl eines geeigneten Notbremsbetriebs als Programm eines Mikrocomputers darstellen.

### Beschreibung von Ausführungsbeispielen

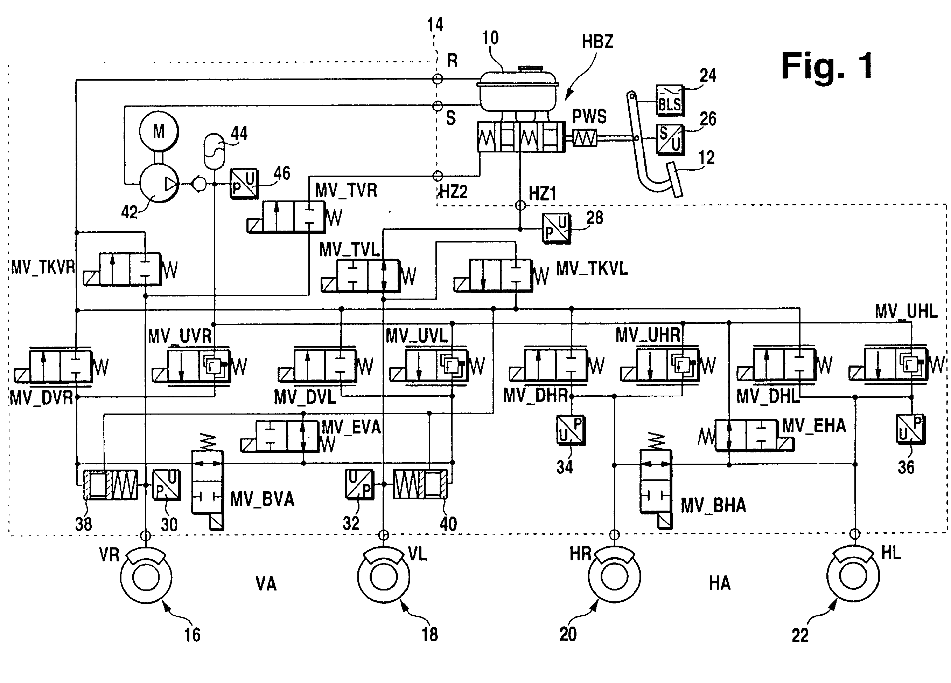

Figur 1 zeigt ein bevorzugtes Ausführungsbeispiel einer elektrohydraulischen Bremsanlage. Sie zeigt einen Hauptbremszylinder HBZ mit Vorratsbehälter 10, an den ein vom Fahrer betätigbares Bremspedal angebracht ist. Ferner ist ein Hydraulikaggregat 14 vorgesehen, welches Ventil- und Pumpenanordnungen zur Steuerung der Radbremsen 16, 18, 20 und 22 enthält. Mit dem Bremspedal 12 ist ein Bremspedalschalter 24 verbunden, welcher bei Betätigen des Bremspedals schließt, und eine Meßeinrichtung 26 zur Erfassung der Auslenkung des Bremspedals. Der Bremspedalschalter kann als einfacher Schließer ausgelegt sein oder zur Verbesserung der Überwachbarkeit als doppelter Schalter mit einem Öffner und einem Schließer. Ebenso kann die Meßeinrichtung 26 zur Erfassung der Auslenkung des Pedals redundant ausgelegt werden. Ferner ist ein Pedalwegsimulator PWS vorgesehen, welcher für den Fahrer bei Betätigen des Bremspedals ein gewohntes Pedalgefühl bezüglich Gegenkraft und Pedalauslenkung simuliert. An den Hauptbremszylinder HBZ sind die zwei Bremskreise HZ1 und HZ2 angeschlossen. In diesen sind jeweils ein Trennventil MV_TVR und MV_TVL eingefügt, welches bei elektrisch gesteuerter Bremsanlage durch Bestromung geschlossen wird. Vor dem Trennventil mißt in zumindest einem der Bremskreise ein Drucksensor 28 den vom Fahrer über die Bremspedalbetätigung aufgebrachten Druck. Bei geschlossenen Trennventilen ist der Hauptbremszylinder hydraulisch vom Druckregelsystem abgetrennt. Im Druckregelsystem sind für jede Radbremse ein Druckmodulator für die Bremsdruckregelung enthalten. Ein Druckmodulator besteht dabei aus je einem Einlaßventil (MV_UVR, MV_UVL, MV_UHR, MV_UHL), je einem Auslaßventil (MV_DVR, MV_DVL, MV_DHR, MV_DHL) und je einem Drucksensor 30, 32, 34 und 36, der den Druck in der zur Radbremse führenden Leitung mißt. In den beiden Vorderraddruckmodulatoren befindet sich je ein Medientrennerkolben 38 und 40 zwischen den Ventilen (Ein- und Auslaßventil) und den Drucksensoren bzw. der Radbremse. Die Druckmodulatoren sind über Ausgleichsventile MV_BVA und MV_BHA verbunden, die bei Bestromung voneinander unabhängig gesteuert werden können. Ferner sind Entlastungsventile MV_EVA bzw. MV_EHA für jede Achse vorgesehen, die in unbestromtem Zustand den Druckabbau aus den Raddruckmodulatoren einer Achse erlauben. Sie verbinden die Druckmodulatoren einer Achse mit den zum Vorratsbehälter 10 führenden Rückführleitungen. Im elektrisch gesteuerten Betriebszustand sind diese beiden Ventile permanent bestromt, d.h. geschlossen. Ferner ist jeweils ein Temperaturkompensationsventil MV_TKVL und MV_TKVR für jeden Vorderraddruckmodulator vorgesehen. Diese Ventile sind unbestromt geschlossen und werden zum Druckabbau aus dem Druckmodulator eines Vorderrades durch Bestromung geöffnet, wenn bestimmte Bedingungen, insbesondere eine sehr lange Bremsdauer, vorliegen. Die Temperaturkompensationsventile verbinden die Bremsleitung zur Radbremse mit der Rücklaufleitung. Die Energie für die Bremsdruckmodulation kommt aus einer von einem Elektromotor angetriebenen Einkolben-Hochdruckpumpe 42. Diese ist an einen Hochdruckspeicher 44 angeschlossen, der als Zwischenpuffer dient und dessen Druck durch einen Drucksensor 46 erfaßt wird. Die Druckleitung der Pumpe 42 führt zu den Einlaßventilen der Radbremsen, während die Saugleitung der Pumpe 42 mit dem Vorratsbehälter 10 verbunden ist. Bezüglich Einzelheiten der hydraulischen Schaltung wird auf das in Figur 1 dargestellte bevorzugte Ausführungsbeispiel verwiesen. Die nachfolgend beschriebene erfindungsgemäße Vorgehensweise wird jedoch nicht nur in Verbindung mit einer solchen Hydraulikschaltung vorteilhaft angewendet, sondern überall dort, wo im Zusammenhang mit elektrisch gesteuerten Bremsanlage der Radbremsdruck abhängig vom Fahrerbremswunsch elektrisch durch Steuern von Ventilanordnungen eingestellt wird.

Im Normalbetrieb arbeitet die in Figur 1 beschriebene Bremsanlage wie folgt. Der Fahrer tritt auf das Bremspedal. Er spürt dabei eine wegabhängige Gegenkraft. Diese Wegabhängigkeit wird durch die definierte Charakteristik des Pedalwegsimulators gebildet. Bei Sensierung eines Bremswunsches über den Pedalwegsensor, den Bremspedalschalter und/oder den Drucksensor werden die Trennventile (MV_TVR und MV_TVL) und die Entlastungsventile (MV_EVA und MV_EHA) geschlossen. Im Hauptbremszylinder HBZ baut sich ein Druck auf, der aus der Pedalkraft resultiert. Aus den Signalen des Bremslichtschalters 24, des Wegsensors 26 und/oder des Drucksensors 28 wird der Bremswunsch des Fahrers beispielsweise als Sollverzögerung oder als Sollbremskraft, errechnet. Aus diesem Bremswunsch werden die einzelnen Sollradbremsdrücke gebildet. Je nach Fahrzustand und Schlupfbedingung werden diese Drücke modifiziert und über die Raddruckmodulatoren durch Ventilbestromungen eingeregelt. Im geschlossenen Regelkreis werden bei jeder Radbremse die aktuellen Drücke an den Raddrucksensoren für den Soll-Ist-Abgleich herangezogen. Bei unterschiedlichen Solldrücken im linken und rechten Rad einer Achse werden die Ausgleichsventile geschlossen und in jeder Radbremse der vorgegebene Solldruck durch Ansteuern der Einlaß- und Auslaßventile im Sinne einer Regelung des Ist-Bremsdruckes auf den Sollbremsdruck eingeregelt.

Zum Druckaufbau an einer Radbremse wird das Einlaßventil so weit bestromt, daß sich der gewünschte Solldruck in der Radbremse mit der gewünschten Dynamik ausbildet. Eine Druckabnahme wird entsprechend durch Bestromung des Auslaßventils erreicht, wobei Bremsflüssigkeit in den Vorratsbehälter über die Rücklaufleitung zurückfließt. Die Entlastungsventile kommen im Fehlerfall des Systems zur Wirkung. Wenn während einer Bremsung das elektrische System ausfällt, fallen alle Ventile in ihren unbestromten Zustand zurück. Die Entlastungsventile öffnen dann die Druckmodulatoren zur Rücklaufleitung, so daß kein Bremsdruck eingesperrt werden kann. Ebenso gestatten diese Ventile im Ruhezustand den Volumenausgleich zum Behälter bei Temperaturschwankungen.

Eine Betätigung der Pumpe 42 findet bei aktivem Bremsvorgang und/oder bei einem Absinken des Speicherdrucks im Speicher 44 unter einen vorbestimmten Wert statt. Neben dieser Funktion wird der erfaßte Speicherdruck 46 auch im Rahmen der Regelung ausgewertet, da er im wesentlichen den am Eingang der Einlaßventile liegenden Druck repräsentiert.

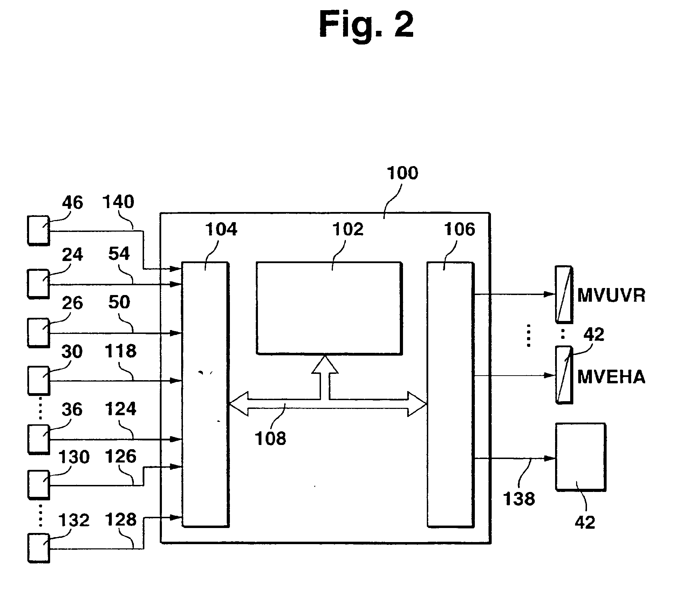

Die elektrisch betätigbaren Ventile sowie die Pumpe 42 werden von wenigstens einer elektronischen Steuereinheit angesteuert, die in Figur 2 skizziert ist. Sie umfaßt dabei wenigstens einen Mikrocomputer 102, eine Eingangsschaltung 104, eine Ausgangsschaltung 106 und ein diese Elemente verbindendes Bussystem 108 zum gegenseitigen Datenaustausch. Der Eingangsschaltung 104 sind die Leitungen 50 und 54 von Bremspedalschalter 24 und Pedalwegsensor 26 zugeführt. Ferner verbinden Eingangsleitungen 118 bis 124 die Eingangsschaltung 104 mit den jeder Radbremse zugeordneten Sensoren 30 bis 36. Ferner ist eine Eingangsleitung 140 vorgesehen, die von der Meßeinrichtung 46 zur Erfassung des Speicherdrucks der Eingangsleitung 104 zugeführt ist. Weitere Eingangsleitungen 126 bis 128 verbinden die Eingangsschaltung 104 mit Meßeinrichtungen 130 bis 132 zur Erfassung weiterer Betriebsgrößen der Bremsanlage, des Fahrzeugs und/oder dessen Antriebseinheit. Derartige Betriebsgrößen sind beispielsweise die Radgeschwindigkeiten, gegebenenfalls das von der Antriebseinheit abgegebene Motormoment, Achslasten, der Druck in der Bremsleitung (Sensor 28), etc. An die Ausgangsschaltung 106 sind mehrere Ausgangsleitungen angeschlossen. Beispielhaft sind die Ausgangsleitungen dargestellt, über welche die Ventile der Druckmodulatoren betätigt werden. Über eine weitere Ausgangsleitung 138 wird die Pumpe 42 angesteuert. Die Steuereinheit 100 steuert die Bremsanlage abhängig von den zugeführten Signalgrößen im oben dargestellten Sinne.

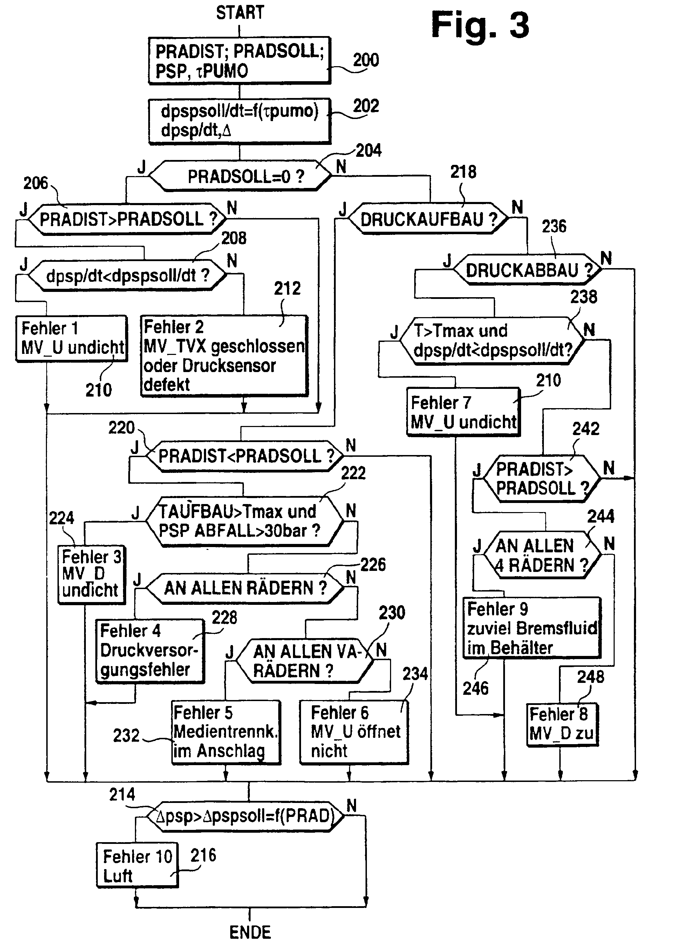

In Figur 3 ist ein bevorzugtes Ausführungsbeispiel zur Feststellung einzelner Fehlerzustände im Bereich der Druckmodulation bzw. der die Druckmodulation ausführenden Komponenten dargestellt. Das skizzierte Programm läuft während des gesamten Betriebszyklus, zum Teil auch im Notbremsbetrieb, zu vorgegebenen Zeitpunkten ab. Das Flußdiagramm stellt die Situation bei der Überwachung einer Radbremse dar. Für die anderen Radbremsen des Fahrzeugs wird ein entsprechendes Programm durchlaufen bzw. das skizzierte Programm nacheinander für jede Radbremse durchlaufen.

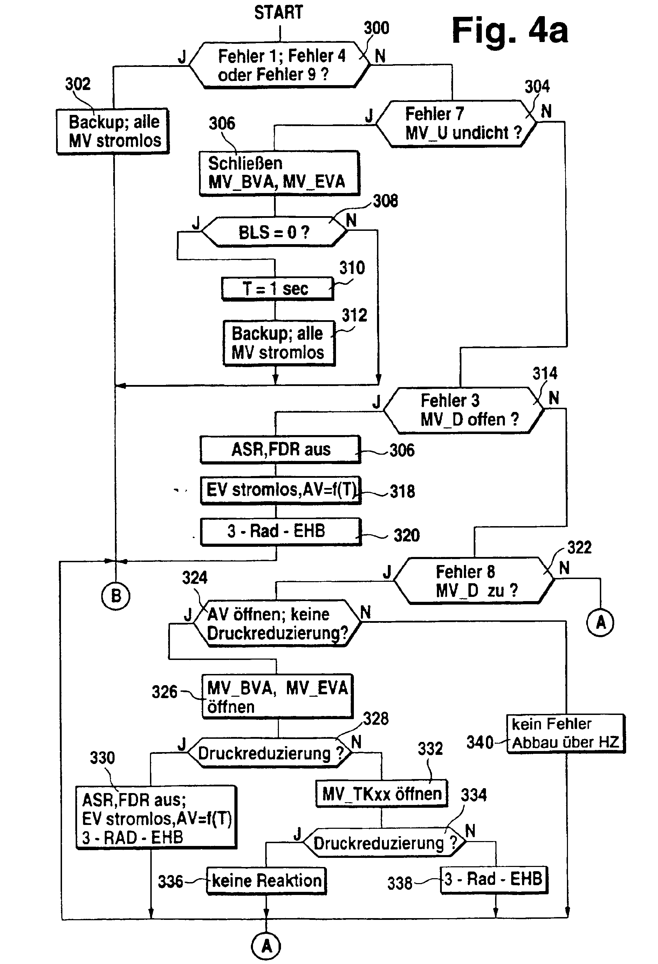

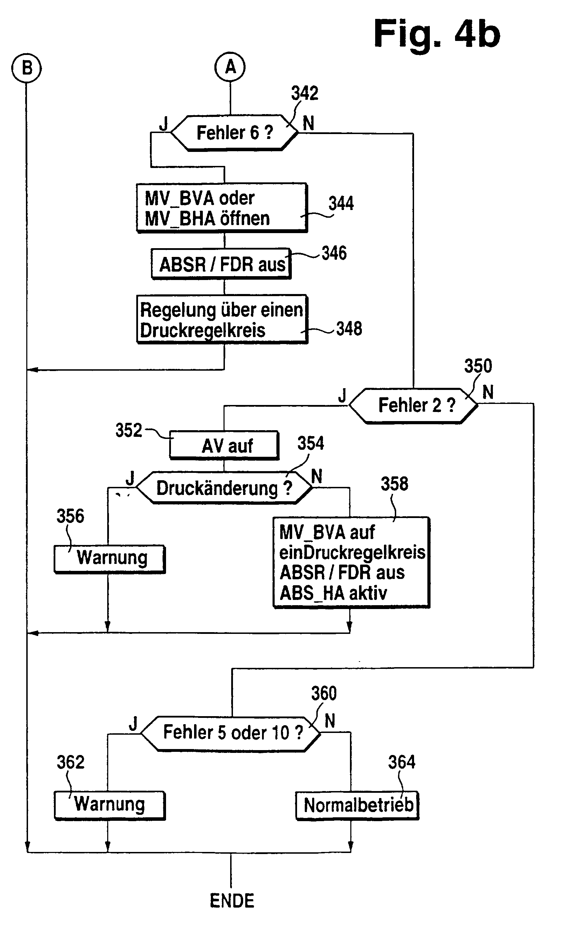

Nach Start des Programms wird im ersten Schritt 200 der in der entsprechenden Radbremse gemessene Istbremsdruck PRADIST, der für diese Radbremse vorgegebene Solldruck PRADSOLL, der Speicherdruck PSP, das Ansteuertastverhältnis τPUMO des Pumpenmotors zur Speicherladung und vom Druckregler vorgegebenen Ventilströme eingelesen. Im darauffolgenden Schritt 202 wird die zulässige Abweichung Δ von Soll- und Istdruck bestimmt, deren Wert nach Maßgabe der Dynamik des Druckregler festgesetzt wird. Ferner wird in einem Ausführungsbeispiel Solldruck, Istdruck und/oder Speicherdruck nach Maßgabe von Kennfeldern, Kennlinie, Tabellen und/oder Berechnungsschritten berücksichtigt. Dabei ist die zulässige Abweichung bei größeren Istdrücken größer. Insbesondere wird auch die Differenz zwischen Istdruck und Speicherdruck herangezogen. Außerdem wird ein Sollgradient, d.h. eine Solländerung des Speicherdrucks über der Zeit dPSPSOLL/dt abhängig vom Tastverhältnis des Pumpenmotoransteuersignals gebildet und auf der Basis des aktuellen und eines vorhergehenden Speicherdrucks PSP die Speicherdruckänderung über der Zeit dPSP/dt bestimmt. Daraufhin wird im Schritt 204 überprüft, ob gerade eine Bremsung stattfindet oder nicht. Es wird überprüft, ob der Sollwert PRADSOLL für dieses Rad gleich Null ist. Ist dies der Fall, findet kein Bremsvorgang statt, so daß gemäß Schritt 206 überprüft wird, ob die Abweichung zwischen gemessenem Bremsdruck PRADIST und Solldruck PRADSOLL größer als die zulässige Abweichung ist. Dabei wird auch die Zeit berücksichtigt, die der Druckregler im Normalfall zur Ausregelung der Regelabweichung im Rahmen der durch die zulässige Abweichung gesetzten Toleranz benötigt, so daß nach Ablauf einer Toleranzzeit nach Beginn des Regelvorgangs die zulässige Abweichung unterschrittten sein muß. Ist dies der Fall, d.h. ist die Abweichung innerhalb des zulässigen Bereichs, arbeitet das System, soweit in diesem Zustand erkennbar, fehlerfrei. Andernfalls wird im Schritt 208 überprüft, ob die Speicherdruckänderung kleiner als der negative Sollwert ist (schneller Speicherdruckabfall). Ist dies der Fall, so wird ein "Fehler1" erkannt. Dies zeigt einen ungewollten Druckanstieg in dem entsprechenden Rad im Zustand "Kein Bremswunsch" an, wobei als fehlerhafte Komponente ein stark undichtes bzw. offenes Einlaßventil isoliert werden kann. Ist die Änderung des Speicherdrucks nicht kleiner als der negative Sollwert, wird "Fehler2" angenommen. Dieser Fehler kann seine Ursache darin haben, daß der Raddrucksensor einen fehlerhaften Druck anzeigt oder daß eine Erwärmung und Ausdehnung der Bremsflüssigkeit in einem eingeschlossenen Raum, bezüglich der Vorderradventile, durch ein nichtöffnendes Trennventil, ein nichtöffnendes Temperaturkompensationsventil oder eine verstopfte Leitung, im Falle der Hinterachsbremsen durch ein nichtöffnendes Entlastungs- oder Balanceventil bzw. einer verstopften Leitung stattgefunden hat. Bei hydraulischen Systemen mit stromlos offenen Auslaßventilen können die Entlastungsventile weggelassen werden. Dann ist das Fehlerbild ein nichtöffnendes Auslaßventil anstatt einem nichtöffnenden Entlastungsventil. Eine Unterscheidung dieser Fehlerzustände wird anhand der Auswahl des geeigneten Notbremsbetriebs in Figur 4 dargestellt.

Nach den Schritten 210 und 212 wird im darauffolgenden Abfrageschritt 214 die Änderung des Speicherdrucks über der Zeit ΔPSP mit einer vom Radistdruck abhängigen Solländerung ΔPSPSOLL verglichen. Ist die Änderung größer als die zulässige Änderung, d.h. wird ein zu großer Speicherdruckabfall bei einem bestimmten Radbremsdruck festgestellt, wird als Fehler "Fehler10" gesetzt. Dies deutet auf Luft in einer oder mehreren Radzangen hin. Danach wird das Programm beendet.

Hat Schritt 204 ergeben, daß ein Bremswunsch des Fahrers oder des Systems (z.B. FDR, ASR, ACC, ...) vorliegt (Sollbremsdruck ist nicht Null), so wird im Schritt 218 überprüft, ob eine Druckaufbauphase vorliegt, d.h. ob das entsprechende Einlaßventil angesteuert wird. Ist dies der Fall, wird im Schritt 220 der Radistdruck mit dem Solldruck verglichen (siehe auch Beschreibung zu Schritt 206). Ist die Abweichung des Istdrucks vom Solldruck kleiner als der zulässige Wert, wird im Schritt 222 überprüft, ob die Aufbauzeit TAUFBAU eine vorgegebene Maximalzeit TMAX überschritten hat (zum Beispiel 2 Sekunden) und ob der Speicherdruckabfall einen vorgegebenen Grenzwert, zum Beispiel 30 bar/sec (schneller Abfall), überschreitet. Ist dies der Fall, wird gemäß Schritt 224 "Fehler3" gesetzt. Dies bedeutet, daß das entsprechende Entlastungsventil bzw. Auslaßventil undicht oder offen ist, oder daß eine Leckage im Bereich der Bremsanlage zwischen dem Speicher und dem Medienbrenner aufgetreten ist. Liegt eine der Bedingungen im Schritt 222 nicht vor, wird gemäß Schritt 226 überprüft, ob die Abweichung zwischen Radbremsdruck und Radsolldruck kleiner als der zulässige Wert an allen Rädern des Fahrzeugs ist. Dies erfolgt anhand entsprechender gesetzter Marken. Ist dies der Fall, wird gemäß Schritt 228 "Fehler4" angenommen. Dies läßt auf einen Fehler in der Druckversorgung schließen. Tritt dieses Fehlerbild nicht an allen Rädern des Fahrzeugs auf, sondern gemäß Schritt 230 nur an den Vorderachsrädern, so wird "Fehler5" (Schritt 232) angenommen. Dieser besteht darin, daß die Medientrennerkolben am Anschlag liegen. Ist diese Bedingung auch nicht erfüllt, d.h. tritt die beschriebene, in Schritt 220 überprüfte Situation nur an einem Rad auf, wird gemäß Schritt 234 "Fehler6" gesetzt. Dieser Fehler kann in einem nichtöffnenden Einlaßventil, in einer Leckage zwischen Medientrenner und Radzange, in einem sich nicht bewegenden Medientrenner, einer verstopften Leitung, einem undichten oder offenen Temperaturkompensationsventil oder in einem defekten Drucksensor liegen.

Nach den Schritten 224, 228, 232, 234 und im Falle einer Nein-Antwort im Schritt 220 wird mit Schritt 214 fortgefahren.

Hat Schritt 218 ergeben, daß kein Druckaufbau vorliegt, wird im Schritt 236 überprüft, ob Druck abgebaut wird. Dies erfolgt anhand eines angesteuerten Auslaßventils. Liegt eine Druckabbauphase vor, wird im Schritt 238 die Ansteuerzeit T auf Überschreiten einer maximalen Druckabbauansteuerzeit Tmax, z.B. 1 Sekunde, verglichen und der Speicherdruckgradient dPSP/dt mit der Solländerung verglichen. Überschreitet die Abbauzeit die Maximalzeit und unterschreitet der Speicherdruckgradient den negativen Sollwert (schneller Abbau), wird "Fehler7" gesetzt (Schritt 240). Dieser zeigt an, daß das Einlaßventil nicht schließt. Ist eine der Bedingungen im Schritt 238 nicht erfüllt, wird im Schritt 242 der Radbremsistdruck PRADIST und der Radbremssolldruck PRADSOLL dahingehend verglichen, ob die Abweichung zwischen Istbremsdruck und Sollbremsdruck größer als der zulässige Wert ist (siehe auch Beschreibung zu Schritt 206). Ist dies der Fall und tritt dieses Ereignis gemäß Schritt 244 an allen vier Rädern auf, so wird gemäß Schritt 246 "Fehler9" angenommen. An allen vier Rädern kann keine Druckreduzierung auf Null bar stattfinden, so daß anzunehmen ist, daß der Fluidspiegel im Vorratsbehälter zu hoch ist oder die Rückleitung zum Behälter verstopft ist.

Tritt die in Schritt 242 überprüfte Situation nicht an allen vier Rädern auf, wird gemäß Schritt 248 "Fehler8" angenommen. Dieser kann als Ursache ein nichtöffnendes Auslaßventil, einen hängenden Medientrenner, ein nichtöffnendes Temperaturkompensationsventil und/oder einen defekten Drucksensor haben. Nach Schritt 240, 246, 248 oder im Falle einer Neinantwort im Schritt 242 und 236 wird mit Schritt 214 weitergefahren.

Auf die oben dargestellte Weise lassen sich unterschiedliche Fehlerbilder im Bereich der Druckmodulationen an den einzelnen Radbremsen feststellen und isolieren. Entsprechend wird je nach festgestelltem Fehlerbild ein geeigneter Notbremsbetrieb ausgewählt, der bei ausreichend vorhandener Betriebssicherheit eine möglichst große Verfügbarkeit der elektrohydraulischen Bremsanlage sicherstellt, ohne daß in den rein hydraulischen Notbremsbetrieb übergegangen werden muß.

Neben der vollständigen Umschaltung auf einen rein hydraulischen Betrieb und Abschalten der elektronischen Regelung der Vorderachs- und Hinterachsbremsen bestehen prinzipiell folgende Teilabschaltungsmöglichkeiten. Zum einen kann mit offenen Balanceventilen an Vorder- und/oder Hinterachse gebremst werden. Ferner kann an einem Vorderrad mit Muskelkraftbetrieb gebremst werden, während die restlichen drei Räder des Fahrzeugs mit elektronischer Druckregelung gebremst werden. Ferner kann ein Bremsen im 3-Rad-EHB-Betrieb erfolgen, in dem an einem Rad der Vorderachse kein Druck aufgebaut wird und das Balanceventil der Vorderachse geschlossen wird. Das Bremsen mit offenen Balanceventilen an einer Achse wird im bevorzugten Ausführungsbeispiel dann durchgeführt, wenn beispielsweise einer der beiden Drucksensoren einer Achse ausfällt. Diese Achse wird dann mit offenem Balanceventil mit Druck beaufschlagt und die Druckregelung auf der Basis des verbleibenden Drucksensors geregelt. Da eine radindividuelle Regelung nicht mehr möglich ist, sind radindividuelle Funktionen abgeschaltet. Die entsprechende Vorgehensweise hat sich auch bei nichtöffnendem Aufbauventil als geeignet erwiesen. Eine Bremsung über Muskelkraftbetrieb an einem Rad und elektrischer Regelung an den restlichen drei Rädern kommt dann in Betracht, wenn sich beispielsweise ein Medientrenner nicht bewegen läßt. Das Rad, dem dieser Medienbrenner zugeordnet ist, wird vom Fahrer über den Hauptzylinder bedient, die restlichen drei Räder werden nach wie vor im elektrohydraulischen Betrieb geregelt. Ein 3-Rad-EHB-Betrieb wird beispielsweise dann eingeleitet, wenn eine Leckage in einem Vorderradbremskreis sensiert wird. Dann wird das Balanceventil der Vorderachse geschlossen und das entsprechende Rad nicht mehr mit Druck versorgt. Das stromlos geschlossene Abbauventil dieses Rades wird in regelmäßigen zeitlichen Abständen kurz angesteuert. Um einen starken Giermomentenaufbau zu vermeiden, ist eine Giermomentenbegrenzung, deren prinzipielle Funktionsweise aus dem Stand der Technik bekannt ist, vorteilhaft.

In Figur 4 ist eine detaillierte Darstellung der eingeleiteten Notbremsbetriebe abhängig vom jeweils vorliegenden Fehlerfall an einem bevorzugten Ausführungsbeispiel dargestellt. Das skizzierte Programm läuft während des Betriebszyklus zu vorgegebenen Zeitpunkten ab.

Im ersten Schritt 300 wird überprüft, ob Fehler 1, Fehler 4 oder Fehler 9 vorliegt. Ist dies der Fall, so ist ein elektronisch geregelter Betrieb nicht möglich. Das System geht in den vollständig hydraulischen Backup über, alle Magnetventile sind stromlos (vgl. Darstellung nach Fig. 1). Dies ist der Fall bei undichtem oder offenen Einlaßventil, bei Fehler in der Druckversorgung oder bei einem zu hohen Fluidspiegel. Danach wird der Programmteil beendet. Liegt keiner der genannten Fehler vor, wird gemäß Schritt 304 überprüft, ob Fehler7 erkannt wurde. Ist dies der Fall, werden gemäß Schritt 306 zunächst die Balance- und gegebenenfalls Entlastungsventile an der fehlerhaften Achse geschlossen. Dann wird im Schritt 308 überprüft, ob der Bremsvorgang durch Lösen des Bremspedals beendet ist (BLS = 0). Ist dies der Fall, wird gemäß Schritt 310 eine vorbestimmte Zeit, vorzugsweise 1 Sekunde, abgewartet und daraufhin im Schritt 312 in dem rein hydraulischen Backup gegangen, in dem alle Magnetventile stromlos sind. Danach wird das Programm ebenso wie bei andauerndem Bremsvorgang beendet.

Liegt Fehler7 nicht vor, wird im Schritt 314 überprüft, ob Fehler3 vorliegt. Ist dies der Fall, wird im Schritt 316 die Antriebsschlupfregelung und die Fahrdynamikregelung abgeschaltet, gemäß Schritt 318 das Einlaßventil stromlos geschaltet und das Auslaßventil in bestimmten zeitlichen Abständen kurz angesteuert und gemäß Schritt 320 eine 3-Rad-EHB-Regelung durchgeführt, bei der die verbleibenden 3 Radbremsen elektronisch geregelt werden. Die Antiblockierschutzfunktion bleibt aktiv. Danach wird das Programm beendet.

Liegt auch Fehler 3 nicht vor, wird gemäß Schritt 322 überprüft, ob Fehler 8 erkannt wurde. Ist dies der Fall, wird im Schritt 324 überprüft, ob bei geöffnetem Auslaßventil keine Druckreduzierung meßbar ist. Ist dies der Fall, wird gemäß Schritt 326 das entsprechende Balance- und gegebenenfalls Entlastungsventil geöffnet. Daraufhin wird im Schritt 328 überprüft, ob jetzt eine Druckreduzierung meßbar ist. Ist dies der Fall, ist davon auszugehen, daß das Auslaßventil nicht öffnet. In diesem Fall wird gemäß Schritt 330 der in den Schritten 316 bis 320 dargestellte 3-Rad-EHB-Betrieb eingeleitet. Ist keine Druckreduzierung meßbar, wird gemäß Schritt 332 das Temperaturkompensationsventil geöffnet. Im darauffolgenden Schritt 334 wird überprüft, ob jetzt eine Druckreduzierung meßbar ist. Ist dies der Fall, so kann als Fehler ein eingeschlossenes Volumen, ein hängender Medientrenner oder ein nichtöffnendes Entlastungsventil angenommen werden. Gemäß Schritt 336 werden keine Reaktionen eingeleitet, da beim nächsten Bremsvorgang ein Fehler erkannt wird, bei welchem kein Druckaufbau im Rad stattfindet. Wird in Schritt 334 keine Druckreduzierung erkannt, so wird in Schritt 338 der bekannte 3-Rad-EHB-Betrieb eingeleitet. Hat Schritt 324 ergeben, daß keine Druckabbauphase aktiv ist, d.h. eine Fehlererkennung nach der Druckabbauphase stattgefunden hat, wird gemäß Schritt 340 kein Fehler angenommen und der Druck über den Hauptzylinder durch Öffnen der Trennventile abgebaut. Nach den Schritten 330, 336 und 338 und 340 wird das Programm beendet.

Liegt Fehler 8 nicht vor, wird gemäß Schritt 342 überprüft, ob Fehler 6 vorliegt. Ist dies der Fall, so wird gemäß Schritt 344 das Balanceventil der Vorderachse oder das der Hinterachse (je nach Fehlerort) geöffnet, gemäß Schritt 346 die ABS-, die Antriebsschlupf- und die Fahrdynamikregelung abgeschaltet und gemäß Schritt 348 die Regelung der Achse über einen einzigen Druckregelkreis durchgeführt. Danach wird das Programm beendet.

Liegt auch Fehler 6 nicht vor, wird gemäß Schritt 350 überprüft, ob Fehler 2 erkannt wurde. Ist dies der Fall, werden gemäß Schritt 352 die Auslaßventile geöffnet und im Schritt 354 überprüft, ob eine Druckänderung stattgefunden hat. Ist dies der Fall, kann davon ausgegangen werden, daß ein eingeschlossenes Volumen vorliegt, weil Entlastungs- oder Balanceventile nicht geöffnet sind. In diesem Fall wird gem. Schritt 356 nur gewarnt. Findet keine Druckänderung statt, so wird von einem Drucksensoroffsetfehler auszugehen sein. Daher wird gemäß Schritt 358 das Balanceventil geöffnet und die Druckmessung über einen anderen Raddrucksensor durchgeführt. Zusatzfunktionen wie ABS, ASR oder FDR werden abgeschaltet. Nach Schritt 356 oder 358 wird das Programm beendet. Liegt auch Fehler 2 nicht vor, wird gemäß Schritt 360 überprüft, ob Fehler 5 oder 10 vorliegt. Ist dies der Fall, wird der Fahrer gem. Schritt 362 gewarnt, andernfalls findet der Normalbetrieb nach Schritt 364 statt.

Die in Figur 3 dargestellte Fehlerüberprüfung läuft parallel zum Programm nach Figur 4 durch, solange kein reiner hydraulischer Backup eingeleitet ist.

## Patentansprüche

1. Verfahren zur Steuerung einer Bremsanlage eines Kraftfahrzeugs, bei welchem
- eine Bremsvorgabe in Sollradbremsdrücke für die einzelnen Radbremsen (16, 18, 20, 22) umgesetzt wird und
- der Radbremsdruck unter Berücksichtigung des gemessenen Radbremsdrucks auf den Sollradbremsdruck eingeregelt wird, und
- die Druckregelung an den einzelnen Radbremsen (16, 18, 20, 22) und/oder eines Speichers (42) überwacht wird und
- ein Fehler der Druckregelung erkannt wird und in Abhängigkeit des Fehlers ein Notbremsbetrieb durchgeführt wird,
**dadurch gekennzeichnet, daß**
ein erster Notbremsbetrieb eingeleitet wird, wenn
- der Druck in einer Radbremse vom Solldruck unzulässig abweicht und
o kein Bremswunsch vorliegt oder
o bei einem Druckaufbau in einer Radbremse der Speicherdruckabfall einen vorgegebenen Grenzwert unterschreitet,
oder
- bei einem Druckaufbau oder -abbau der Druck in allen Rädern von den Solldrücken unzulässig abweicht oder
- beim einem länger als eine bestimmte Zeit andauernder Druckabbau der Speicherdruck unzulässig abfällt,
wobei vorgesehen ist, dass der erste Notbremsbetrieb darin besteht, daß die Ventilanordnungen derart gesteuert werden, daß der Fahrer zumindest zu den Vorderachsbremsen (16, 18) einen hydraulischen Durchgriff hat.

2. Verfahren zur Steuerung einer Bremsanlage eines Kraftfahrzeugs nach Anspruch 1, **dadurch gekennzeichnet, daß**
der erste Notbremsbetrieb nicht eingeleitet wird und der Fahrer lediglich gewarnt wird, wenn
- bei einem Druckaufbau der Druck in beiden Vorderrädern (VR, VL) von den Solldrücken unzulässig abweicht und
- der Speicherdruckabfall größer als ein raddruckabhängiger Grenzwert ist.

3. Verfahren zur Steuerung einer Bremsanlage eines Kraftfahrzeugs nach Anspruch 1,
**dadurch gekennzeichnet, daß**
ein zweiter Notbremsbetrieb eingeleitet wird,
- bei Nichtvorliegen eines Bremswunschs oder
- bei einem Druckaufbau der Druck in einem Rad vom Solldruck unzulässig abweicht,
wobei der zweite Notbremsbetrieb darin besteht, daß die Drucksteuerung an diesem Rad mit dem anderen Rad der gleichen Achse in einem Druckregelkreis erfolgt.

4. Verfahren zur Steuerung einer Bremsanlage eines Kraftfahrzeugs nach Anspruch 1,
**dadurch gekennzeichnet, dass**
ein dritter Notbremsbetrieb eingeleitet wird, wenn
- bei einem länger als eine bestimmte Zeit andauernden Druckaufbau der Druck in einem Rad vom Solldruck unzulässig abweicht oder
- beim Druckabbau der Druck in einem Rad vom Solldruck unzulässig abweicht,
wobei der dritte Notbremsbetrieb darin besteht, daß das betroffene Rad nicht mehr geregelt wird und vom Hauptzylinder (HBZ) abgetrennt wird, während die verbliebenen Räder weiterhin geregelt werden.

5. Verfahren nach Anspruch 3, **dadurch gekennzeichnet daß** der zweite Notbremsbetrieb nur dann eingeleitet wird, wenn zusätzlich beim Rad-Druckaufbau der Speicherdruckabfall einen vorgegebenen Grenzwert nicht unterschreitet.

6. Verfahren nach Anspruch 3 oder 5, **dadurch gekennzeichnet, daß** der zweite Notbremsbetrieb durch Öffnen des der Achse zugeordneten Balanceventils erfolgt.

7. Verfahren nach Anspruch 3, 5 oder 6, **dadurch gekennzeichnet, daß** der zweite Notbremsbetrieb radindividuelle Funktionen der betroffenen Achse abgeschaltet, während zumindest die ABS-Funktion an der anderen Achse erhalten bleibt.

8. Verfahren nach Anspruch 3, 5, 6 oder 7, **dadurch gekennzeichnet, daß**, wenn bei Nichtvorliegen eines Bremswunschs oder bei einem Druckaufbau der Druck in einem Rad vom Solldruck unzulässig abweicht, die Ventilanordnung im Sinne eines Druckabbaus an diesem Rad angesteuert wird, wobei der zweite Notbremsbetrieb nur dann eingeleitet wird, wenn keine Druckänderung erkannt wird.

9. Verfahren nach Anspruch 4, **dadurch gekennzeichnet, daß** beim dritten Notbremsbetrieb radindividuelle Funktionen der betroffenen Achse abgeschaltet werden, während zumindest die ABS-Funktion an der anderen Achse erhalten bleibt.

10. Verfahren nach Anspruch 4 oder 9, **dadurch gekennzeichnet, daß** während des dritten Notbremsbetriebs die Ventilanordnung des betroffenen Rades zeitabhängig im Sinne eines Druckabbaus angesteuert wird.

11. Verfahren nach Anspruch 4, 9 oder 10, **dadurch gekennzeichnet, daß** zur Vermeidung eines starken Giermomentenaufbau eine Giermomentenabschwächung vorgesehen ist.

12. Verfahren nach Anspruch 4, 9, 10 oder 11, **dadurch gekennzeichnet, daß** Antriebsschlupfregler bzw. Fahrdynamikregler abgeschaltet werden während der Antiblockierregler aktiv bleibt.

13. Verfahren nach einem der vorhergehenden Ansprüche, **dadurch gekennzeichnet, daß** die Fehlerermittlung auch dann aktiv ist, wenn bereits ein Fehler erkannt wurde und das System sich nicht in einem rein hydraulischen Notbremsbetrieb befindet.

14. Vorrichtung zur Steuerung einer Bremsanlage eines Kraftfahrzeugs, mit
- einer Steuereinheit (100),
o welche eine Bremsvorgabe in Sollradbremsdrücke für die einzelnen Radbremsen (16, 18, 20, 22) umsetzt und
o die den Radbremsdruck unter Berücksichtigung des gemessenen Radbremsdrucks auf den Sollradbremsdruck einregelt, und
- Mittel (30 bis 36, 46) zur Überwachung der Druckregelung an den einzelnen Radbremsen (16, 18, 20, 22) und/oder eines Speichers (42) und
- einer Fehlererkennungseinheit (102), die einen Fehler der Druckregelung erkennt,
wobei die Steuereinheit in Abhängigkeit des Fehlers ein Notbremsbetrieb durchführt **dadurch gekennzeichnet, daß**
die Steuereinheit ein Mittel (102) aufweist, welches einen ersten Notbremsbetrieb einleitet, wenn
- der Druck in einer Radbremse vom Solldruck unzulässig abweicht und
o kein Bremswunsch vorliegt oder
o bei einem Druckaufbau in einer Radbremse der Speicherdruckabfall einen vorgegebenen Grenzwert unterschreitet,
oder
- bei einem Druckaufbau oder -abbau der Druck in allen Rädern von den Solldrücken unzulässig abweicht oder
- beim einem länger als eine bestimmte Zeit andauernder Druckabbau der Speicherdruck unzulässig abfällt,
wobei vorgesehen ist, dass der erste Notbremsbetrieb darin besteht, daß die Ventilanordnungen derart gesteuert werden, daß der Fahrer zumindest zu den Vorderachsbremsen (16, 18) einen hydraulischen Durchgriff hat.

15. Verfahren zur Steuerung einer Bremsanlage eines Kraftfahrzeugs nach Anspruch 14,
**dadurch gekennzeichnet, daß**
das Mittel (102) den ersten Notbremsbetrieb nicht einleitet, wenn
- bei einem Druckaufbau der Druck in beiden Vorderrädern (VR, VL) von den Solldrücken unzulässig abweicht oder
- der Speicherdruckabfall größer als ein raddruckabhängiger Grenzwert ist.

16. Vorrichtung zur Steuerung einer Bremsanlage eines Kraftfahrzeugs nach Anspruch 14, **dadurch gekennzeichnet, daß**
das Mittel (102) einen zweiten Notbremsbetrieb einleitet, wenn
- bei Nichtvorliegen eines Bremswunschs oder
- bei einem Druckaufbau der Druck in einem Rad vom Solldruck unzulässig abweicht,
wobei der zweite Notbremsbetrieb darin besteht, daß die Drucksteuerung an diesem Rad mit dem anderen Rad der gleichen Achse in einem Druckregelkreis erfolgt.

17. Vorrichtung zur Steuerung einer Bremsanlage eines Kraftfahrzeugs nach Anspruch 14, **dadurch gekennzeichnet, dass**
das Mittel (102) einen dritten Notbremsbetrieb einleitet, wenn
- bei einem länger als eine bestimmte Zeit andauernden Druckaufbau der Druck in einem Rad vom Solldruck unzulässig abweicht oder
- beim Druckabbau der Druck in einem Rad vom Solldruck unzulässig abweicht,
wobei der dritte Notbremsbetrieb darin besteht, daß das betroffene Rad nicht mehr geregelt wird und vom Hauptzylinder (HBZ) abgetrennt wird, während die verbliebenen Räder weiterhin geregelt werden.

## Claims

1. Method for controlling a brake system of a motor vehicle, in which
- a brake predefined value is converted into setpoint wheel brake pressures for the individual wheel brakes (16, 18, 20, 22), and
- the wheel brake pressure is adjusted to the setpoint wheel brake pressure taking into account the measured wheel brake pressure, and
- the pressure control at the individual wheel brakes (16, 18, 20, 22) and/or of an accumulator (42) is monitored, and
- a fault in the pressure control is detected and an emergency braking operation is carried out as a function of the fault,
**characterized in that**
a first emergency braking operation is initiated if
- the pressure in a wheel brake deviates unacceptably from the setpoint pressure, and
o there is no braking request or
o when there is an increase in pressure in a wheel brake the drop in pressure of the accumulator drops below a predefined limiting value,
or
- when there is an increase or decrease in pressure the pressure in all the wheels deviates unacceptably from the setpoint pressures, or
- when there is a decrease in pressure which lasts for longer than a specific time the accumulator pressure drops unacceptably,
there being provision for the first emergency braking operation to consist in the valve arrangements being controlled in such a way that the driver has hydraulic access at least to the front axle brakes (16, 18).

2. Method for controlling a brake system of a motor vehicle according to Claim 1, **characterized in that** the first emergency braking operation is not initiated and the driver is merely warned if
- when there is an increase in pressure the pressure in the two front wheels (VR, VL) deviates unacceptably from the setpoint pressures, and
- the drop in pressure of the accumulator is greater than a wheel-pressure-dependent limiting value.

3. Method for controlling a brake system of a motor vehicle according to Claim 1, **characterized in that** a second emergency braking operation is initiated
- if a braking request is not present or
- when there is an increase in pressure the pressure in a wheel deviates unacceptably from the setpoint pressure, the second emergency braking operation consisting in the pressure control at this wheel being carried out with the other wheel on the same axle in a pressure control circuit.

4. Method for controlling a brake system of a motor vehicle according to Claim 1, **characterized in that** a third emergency braking operation is initiated if
- when there is an increase in pressure which lasts for longer than a specific time the pressure in a wheel deviates unacceptably from the setpoint pressure or
- when there is a decrease in pressure the pressure in a wheel deviates unacceptably from the setpoint pressure,
the third emergency braking operation consisting in the fact that the respective wheel is no longer controlled and is disconnected from the master cylinder (HBZ) while the remaining wheels continue to be controlled.

5. Method according to Claim 3, **characterized in that** the second emergency braking operation is initiated only if in addition when there is an increase in wheel pressure the drop in pressure of the accumulator does not drop below a predefined limiting value.

6. Method according to Claim 3 or 5, **characterized in that** the second emergency braking operation is carried out by opening the balance valve which is assigned to the axle.

7. Method according to Claim 3, 5 or 6, **characterized in that** the second emergency braking operation switches off wheel-specific functions of the respective axle, while at least the ABS function is retained on the other axle.

8. Method according to Claim 3, 5, 6 or 7, **characterized in that** if when a braking request is not present or when there is an increase in pressure the pressure deviates unacceptably from the setpoint pressure in one wheel, the valve arrangement is actuated at this wheel in the sense of a decrease in pressure, the second emergency braking operation being initiated only if a change in pressure is not detected.

9. Method according to Claim 4, **characterized in that** in the third emergency braking operation wheel-specific functions of the respective axle are switched off, while at least the ABS function is retained on the other axle.

10. Method according to Claim 4 or 9, **characterized in that**, during the third emergency braking operation, the valve arrangement of the respective wheel is actuated in a time-dependent manner in the sense of a decrease in pressure.

11. Method according to Claim 4, 9 or 10, **characterized in that** a means of attenuating the yaw moment is provided in order to avoid a severe increase in yaw moment.

12. Method according to Claim 4, 9, 10 or 11, **characterized in that** traction controllers or vehicle movement dynamics controllers are switched off while the antilock brake controller remains active.

13. Method according to one of the preceding claims, **characterized in that** the fault determining means is active even if a fault has already been detected and the system is not in a purely hydraulic emergency braking operation.

14. Device for controlling a brake system of a motor vehicle, having
- a control unit (100),
o which converts a brake predefined value into setpoint wheel brake pressures for the individual wheel brakes (16, 18, 20, 22), and
o which adjusts the wheel brake pressure to the setpoint wheel brake pressure taking into account the measured wheel brake pressure, and
- means (30 to 36, 46) for monitoring the pressure control at the individual wheel brakes (16, 18, 20, 22) and/or of an accumulator (42) and
- a fault-detection unit (102) which detects a fault in the pressure control,
the control unit carrying out an emergency braking operation has a function of the fault, **characterized in that**
the control unit has a means (102) which initiates a first emergency braking operation if
- the pressure in a wheel brake deviates unacceptably from the setpoint pressure, and
o there is no braking request or
o when there is an increase in pressure in a wheel brake the drop in pressure of the accumulator drops below a predefined limiting value,
or
- when there is an increase or decrease in pressure the pressure in all the wheels deviates unacceptably from the setpoint pressures, or
- when there is a decrease in pressure which lasts for longer than a specific time the accumulator pressure drops unacceptably,
there being provision for the first emergency braking operation to consist in the valve arrangements being controlled in such a way that the driver has hydraulic access at least to the front axle brakes (16, 18).

15. Device for controlling a brake system of a motor vehicle according to Claim 14, **characterized in that** the means (102) does not initiate the first emergency braking operation if
- when there is an increase in pressure the pressure in the two front wheels (VR, VL) deviates unacceptably from the setpoint pressures, or
- the drop in pressure of the accumulator is greater than a wheel-pressure-dependent limiting value.

16. Device for controlling a brake system of a motor vehicle according to Claim 14, **characterized in that** the means (102) initiates a second emergency braking operation if
- when a braking request is not present or
- when there is an increase in pressure, the pressure in a wheel deviates unacceptably from the setpoint pressure, the second emergency braking operation consisting in the pressure control at this wheel being carried out with the other wheel on the same axle in a pressure control circuit.

17. Device for controlling a brake system of a motor vehicle according to Claim 14, **characterized in that** the means (102) initiates a third emergency braking operation if
- when there is an increase in pressure which lasts for longer than a specific time the pressure in a wheel deviates unacceptably from the setpoint pressure or
- when there is a decrease in pressure the pressure in a wheel deviates unacceptably from the setpoint pressure,
the third emergency braking operation consisting in the fact that the respective wheel is no longer controlled and is disconnected from the master cylinder (HBZ) while the remaining wheels continue to be controlled.

## Revendications

1. Procédé de commande d'un système de freinage d'un véhicule automobile, selon lequel
- on convertit une donnée de freinage est convertie en pressions de frein de roue de consigne pour les différents freins de roue (16, 18, 20, 22) et
- on régle la pression de frein de roue sur la pression de frein de roue de consigne en tenant compte de la pression de frein de roue mesurée,
- on surveille la régulation de pression sur les différents freins de roue (16, 18, 20, 22) et/ou d'un accumulateur (42), et
- si un défaut de la régulation de pression est détecté, un freinage de secours est effectué en fonction du défaut,
**caractérisé en ce qu'**
un premier freinage de secours est déclenché si
- la pression dans un frein de roue diffère de manière non autorisée de la pression de consigne et
• en l'absence d'un souhait de freinage, ou
• si lors de l'établissement d'une pression dans un frein de roue la baisse de pression à l'accumulateur passe en dessous d'une valeur limite prédéterminée,
ou si
- lors de l'établissement ou d'une baisse de pression, la pression dans toutes les roues diffère de manière non autorisée des pressions de consigne,
- ou si, lors d'une baisse de pression plus longue qu'un temps prédéterminé, la pression à l'accumulateur baisse de manière non autorisée,
le premier freinage de secours consistant à commander les dispositifs de soupapes de telle sorte que le conducteur peut effectuer une intervention hydraulique au moins sur les freins d'essieu avant (16, 18).

2. Procédé de commande d'un système de freinage d'un véhicule automobile selon la revendication 1,
**caractérisé en ce que**
le premier freinage de secours n'est pas déclenché et le conducteur n'est averti que si
- lors de l'établissement d'une pression la pression dans les deux roues avant (VR, VL) diffère de manière non autorisée des pressions de consigne, et si
- la baisse de pression à l'accumulateur est supérieure à une valeur limite qui dépend de la pression de la roue.

3. Procédé de commande d'un système de freinage d'un véhicule automobile selon la revendication 1,
**caractérisé en ce qu'**
un deuxième freinage de secours est déclenché,
- en l'absence d'un souhait de freinage ou
- si, lors de l'établissement d'une pression, la pression dans une roue diffère de manière non autorisée de la pression de consigne,
le deuxième freinage de secours consistant à commander la pression sur cette roue avec l'autre roue du même essieu dans un circuit de régulation de pression.

4. Procédé de commande d'un système de freinage d'un véhicule automobile selon la revendication 1,
**caractérisé en ce qu'**
un troisième freinage de secours est déclenché si
- lors de l'établissement d'une pression plus long qu'un temps prédéterminé, la pression dans une roue diffère de manière non autorisée de la pression de consigne, ou si
- lors de la baisse de pression, la pression dans une roue diffère de manière non autorisée de la pression de consigne,
le troisième freinage de secours consistant à ne plus réguler la roue concernée et de la séparer du maître-cylindre (HBZ) tandis que les autres roues continuent à être régulées.

5. Procédé selon la revendication 3,
**caractérisé en ce que**
le deuxième freinage de secours n'est déclenché que si, lors de l'établissement de la pression de la roue, la baisse de pression à l'accumulateur ne passe pas en plus en dessous d'une valeur limite prédéterminée.

6. Procédé selon la revendication 3 ou 5,
**caractérisé en ce que**
le deuxième freinage de secours s'effectue par l'ouverture de la soupape d'équilibrage associée à l'essieu.

7. Procédé selon la revendication 3, 5 ou 6,
**caractérisé en ce que**
le deuxième freinage de secours désactive des fonctions individuelles des roues de l'essieu concerné tandis qu'au moins la fonction ABS reste activée sur l'autre essieu.

8. Procédé selon la revendication 3, 5, 6 ou 7,
**caractérisé en ce qu'**
en l'absence d'un souhait de freinage ou si, lors de l'établissement d'une pression, la pression dans une roue diffère de manière non autorisée de la pression de consigne, le dispositif de soupapes est commandé dans le sens d'une baisse de pression sur cette roue, le deuxième freinage de secours n'étant déclenché que si aucune variation de pression n'est détectée.

9. Procédé selon la revendication 4,
**caractérisé en ce que**
lors du troisième freinage de secours, des fonctions individuelles des roues de l'essieu concerné sont désactivées tandis qu'au moins la fonction ABS reste activée sur l'autre essieu.

10. Procédé selon la revendication 4 ou 9,
**caractérisé en ce que**
pendant le troisième freinage de secours, le dispositif de soupapes de la roue concernée est commandé en fonction du temps dans le sens d'une baisse de pression.

11. Procédé selon la revendication 4, 9 ou 10,
**caractérisé en ce que**
pour éviter l'établissement d'un couple de lacet important, un affaiblissement de couple de lacet est prévu.

12. Procédé selon la revendication 4, 9, 10 ou 11,
**caractérisé en ce que**
des régulateurs de patinage d'entraînement ou des régulateurs de dynamique de marche sont désactivés tandis que le régulateur antiblocage reste actif.

13. Procédé selon l'une quelconque des revendications précédentes,
**caractérisé en ce que**
la détection de défaut est également active si un défaut a déjà été détecté et le système ne se trouve plus dans un mode de freinage de secours purement hydraulique.

14. Dispositif de commande d'un système de freinage d'un véhicule automobile, comprenant :
- une unité de commande (100) qui convertit une consigne de freinage en pressions de frein de roue de consigne pour les différents freins de roue (16, 18, 20, 22), et qui règle la pression de frein de roue sur la pression de frein de roue de consigne en tenant compte de la pression de frein de roue mesurée, et
- des moyens (30 à 36, 46) pour surveiller la régulation de pression sur les différents freins de roue (16, 18, 20, 22) et/ou d'un accumulateur (42), et
- une unité de détection de défaut (102) qui détecte un défaut de la régulation de pression,
l'unité de commande effectuant un freinage de secours en fonction du défaut,
**caractérisé en ce que**
l'unité de commande présente un moyen (102) qui déclenche un premier freinage de secours si
- la pression dans un frein de roue diffère de manière non autorisée de la pression de consigne et
• en l'absence d'un souhait de freinage ou
• si, lors de l'établissement d'une pression dans un frein de roue, la baisse de pression à l'accumulateur passe en dessous d'une valeur limite prédéterminée,
ou si
- lors de l'établissement ou d'une baisse de pression, la pression dans toutes les roues diffère de manière non autorisée des pressions de consigne,
- ou si, lors d'une baisse de pression plus longue qu'un temps prédéterminé, la pression à l'accumulateur baisse de manière non autorisée,
le premier freinage de secours consistant à commander les dispositifs de soupapes de telle sorte que le conducteur peut effectuer une intervention hydraulique au moins sur les freins d'essieu avant (16, 18).

15. Dispositif de commande d'un système de freinage d'un véhicule automobile selon la revendication 14,
**caractérisé en ce que**
le moyen (102) ne déclenche pas le premier freinage de secours si
- lors de l'établissement d'une pression, la pression dans les deux roues avant (VR, VL) diffère de manière non autorisée des pressions de consigne, et si
- la baisse de pression à l'accumulateur est supérieure à une valeur limite qui dépend de la pression de la roue.

16. Procédé de commande d'un système de freinage d'un véhicule automobile selon la revendication 14,
**caractérisé en ce que**
le moyen (102) déclenche un deuxième freinage de secours
- en l'absence d'un souhait de freinage ou
- si, lors de l'établissement d'une pression, la pression dans une roue diffère de manière non autorisée de la pression de consigne,
le deuxième freinage de secours consistant à commander la pression sur cette roue avec l'autre roue du même essieu dans un circuit de régulation de pression.

17. Procédé de commande d'un système de freinage d'un véhicule automobile selon la revendication 14,
**caractérisé en ce que**
le moyen (102) déclenche un troisième freinage de secours si
- lors de l'établissement d'une pression plus long qu'un temps prédéterminé, la pression dans une roue diffère de manière non autorisée de la pression de consigne, ou si
- lors de la baisse de pression, la pression dans une roue diffère de manière non autorisée de la pression de consigne,
le troisième freinage de secours consistant à ne plus réguler la roue concernée et à la séparer du maître-cylindre (HBZ) tandis que les autres roues continuent à être régulées.
